# EUROPÄISCHE PATENTSCHRIFT

(11) **EP 2 512 022 B1**
(45) Veröffentlichungstag und Bekanntmachung des Hinweises auf die Patenterteilung: **05.06.2019**
(21) Anmeldenummer: 12163849.8
(22) Anmeldetag: 12.04.2012
(51) Int. Cl.: H02M 5/458

(54) **Elektrische Schaltung zur potentialgetrennten Energieübertragung**
Electrical circuit for potential-separated energy transmission
Circuit électrique pour la transmission d'énergie isolée par potentiel

(30) Priorität: 12.04.2011 DE 102011007197
(43) Veröffentlichungstag der Anmeldung: 17.10.2012
(73) Patentinhaber: GE Energy Power Conversion GmbH, 12277 Berlin (DE)
(72) Erfinder: Brandt, Axel, Dr., 16761 Henningsdorf (DE); Janning, Jörg, Dr., 12559 Berlin (DE); Petzoldt, Jürgen, Prof. Dr.-Ing., 98693 Ilmenau (DE); Rädel, Uwe, Dr.-Ing., 98693 Ilmenau (DE)
(74) Vertreter: Serjeants LLP

(56) Entgegenhaltungen:
- EP-A1- 2 180 586
- EP-A2- 1 226 994
- DE-A1-102008 052 587
- KUNS M ET AL: "ENTWICKLUNG EINER MASSEARMEN ENERGIEVERSORGUNG FUER ELEKTRISCHE TRIEBFAHRZEUGE DEVELOPING A LOW-MASS POWER SUPPLY FOR ELECTRIC RAIL VEHICLES DEVELOPPEMENT D'UNE ALIMENTATION ENERGIQUE A VEHICULES FERROVIAIRESELECTRIQUES", ZEITSCHRIFT FUR EISENBAHNWESEN UND VERKEHRSTECHNIK. DIE EISENBAHNTECHNIK + GLASERS ANNALEN, GEORG SIEMENS VERLAGSBUCHHANDLUNG. BERLIN, DE, Bd. 123, Nr. 11/12, 1. November 1999 (1999-11-01), Seiten 423-426, XP000877540, ISSN: 0941-0589

## Beschreibung

Die Erfindung betrifft eine elektrische Schaltung zur potentialgetrennten Energieübertragung nach dem Oberbegriff des Anspruchs 1.

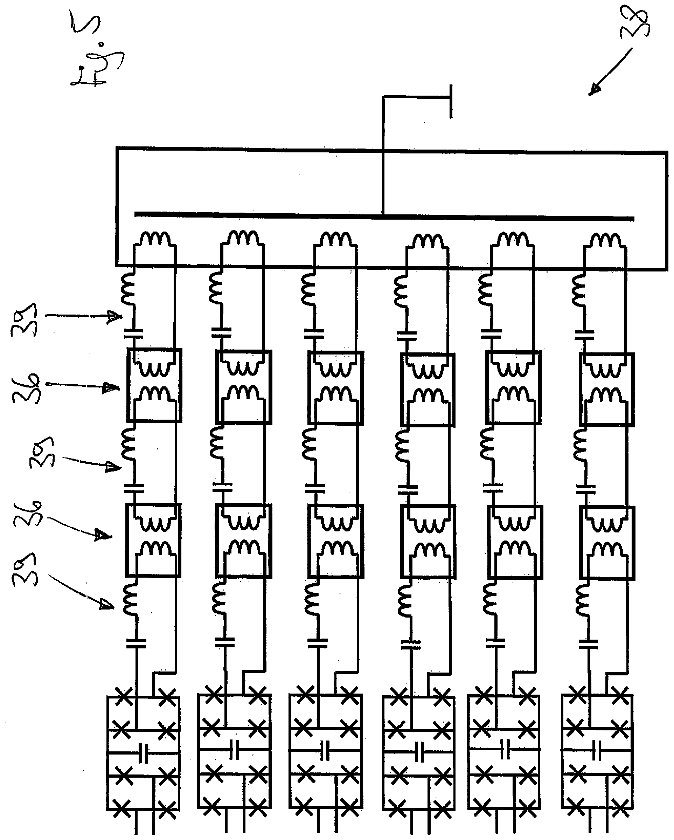

Eine derartige elektrische Schaltung ist aus der DE 10 2008 052 587 A1 bekannt. In der dortigen Figur 5 sind mehrere Teilmodule gezeigt, wobei jedes der Teilmodule einen Gleichstromkreis (GSK) und eine Stromrichtereinheit (SRE) aufweist. Die Stromrichtereinheiten sind über eine magnetische Resonanzkopplung miteinander verbunden, wobei die Resonanzkopplung einen Transformator und jeweils einen Resonanzkreis für jede Stromrichtereinheit aufweist. Die bekannte elektrische Schaltung ist dazu vorgesehen, mehrere Gleichstromkreise potentialgetrennt miteinander zu koppeln und Energie in beliebiger Richtung zwischen diesen Gleichstromkreisen zu übertragen.

Aufgabe der vorliegenden Erfindung ist es, die bekannte elektrische Schaltung weiterzuentwickeln.

Die EP 1 226 994 A2 und die EP 2 180 586 A1 beschreiben ebenfalls Schaltungen nach dem Oberbegriff des Anspruchs 1.

Die Erfindung löst diese Aufgabe durch eine elektrische Schaltung nach dem Anspruch 1.

Bei der Erfindung sind mindestens drei Teilmodule vorgesehen, die über eine potentialtrennende, magnetische Resonanzkopplung miteinander verbunden sind. Bei den drei Teilmodulen sind jeweils ein erster Stromrichter, ein Energiespeicher und ein zweiter Stromrichter miteinander verbunden, wobei die zweiten Stromrichter über die Resonanzkopplung miteinander verbunden sind. Im Betrieb sind an den ersten Stromrichtern mindestens eine Eingangsspannung und mindestens eine Ausgangsspannung mit unterschiedlichen Frequenzen vorhanden.

Die erfindungsgemäße elektrische Schaltung kann zur potentialgetrennten Energieübertragung zwischen zwei elektrischen Energieübertragungsnetzen und/oder Energieverbrauchern verwendet werden. Die Erfindung weist den Vorteil auf, dass ein zur Potentialtrennung vorgesehener Transformator mit einem vergleichsweise geringen Aufwand realisiert werden kann.

In entsprechender Weise kann die Erfindung auch bei einem aktiven Filter zur Anwendung kommen, insbesondere bei einem Netzfilter.

Ein weiterer Vorteil besteht darin, dass die Ein- und Ausgangsspannung/en beliebig mit zwei- oder mehreren Gleich- oder Wechselspannungsnetzen und/oder -verbrauchern verbunden werden können. Die Spannungen bzw. Ströme der Netze und/oder Verbraucher können mit Hilfe der erfindungsgemäßen Schaltung optimal aneinander angepasst werden.

Beispielsweise lassen sich mit Hilfe der erfindungsgemäßen Schaltung aus einem Wechselspannungsnetz mehrere ausgangsseitige Laststränge bilden, die unterschiedliche Verbraucher versorgen. Dabei können in den einzelnen Laststrängen unterschiedlich hohe Wirkleistungen übertragen werden.

Gegebenenfalls ist es dabei möglich, nur einen einzigen Laststrang zu belasten, während die anderen Laststränge im Leerlauf betrieben werden.

Bei einer vorteilhaften Weiterbildung der Erfindung sind im Betrieb zwischen den zweiten Stromrichtern und der Resonanzkopplung zweite Spannungen mit Resonanzfrequenzen vorhanden, die wesentlich größer sind als die Frequenzen der Eingangs- und der Ausgangsspannung/en. Der für die Potentialtrennung vorgesehene Transformator liegt an den zweiten Spannungen an. Damit kann der Transformator kleiner ausgebildet und mit einem geringeren Aufwand hergestellt werden.

Gemäß der Erfindung sind n Teilmodule vorhanden, wobei j Teilmodule der/den Eingangsspannung/en und k Teilmodule der/den Ausgangsspannung/en zugeordnet sind, und wobei j + k = n gilt. Die zu der/den Eingangsspannung/en zugehörigen Teilmodule und/oder die zu der/den Ausgangsspannung/en zugehörigen Teilmodule können dabei jeweils eine Serienschaltung oder eine Parallelschaltung oder eine Kombination davon bilden. Die eingangs- und ausgangsseitigen Leistungen können damit in beliebiger Weise auf die Teilmodule verteilt werden. Dies erlaubt es, einfachere Teilmodule zu verwenden.

Gemäß der Erfindung bilden die n Teilmodule ein Grundmodul, und es sind m Grundmodule vorhanden. Damit ist es möglich, die erfindungsgemäße elektrische Schaltung in nahezu beliebiger Weise zu erweitern.

Weitere Merkmale, Anwendungsmöglichkeiten und Vorteile der Erfindung ergeben sich aus der nachfolgenden Beschreibung von Ausführungsbeispielen der Erfindung, die in Figuren dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in den Figuren.

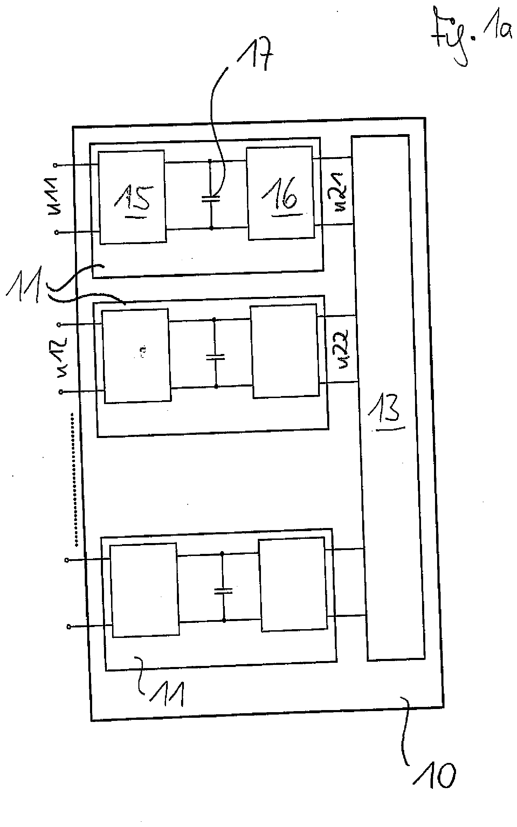

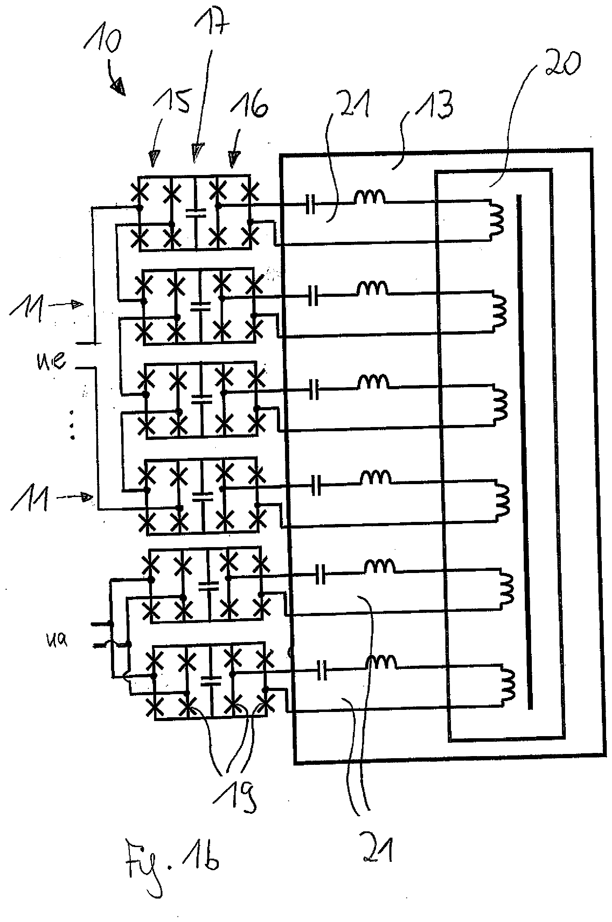

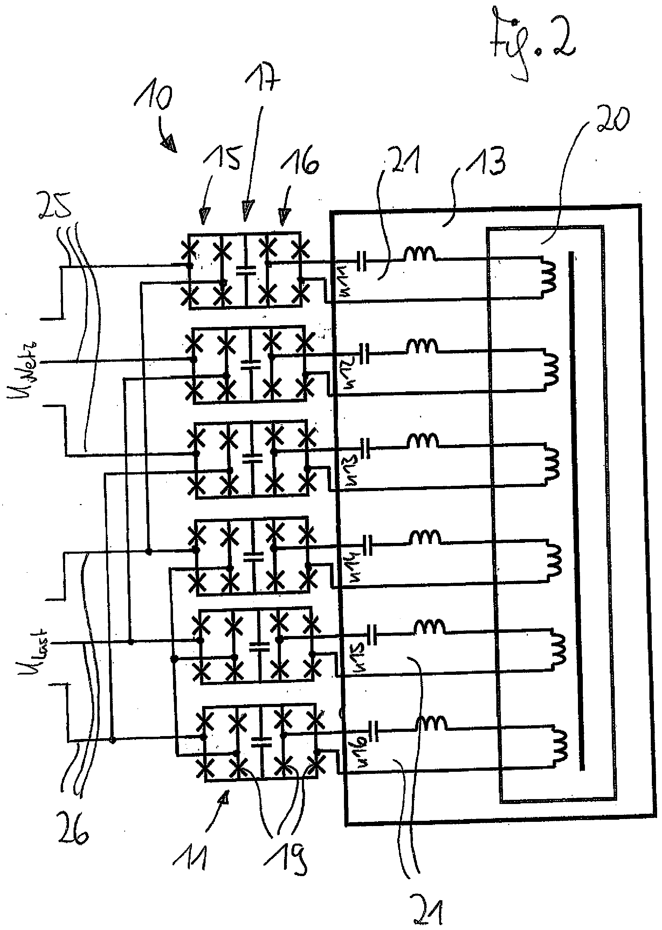

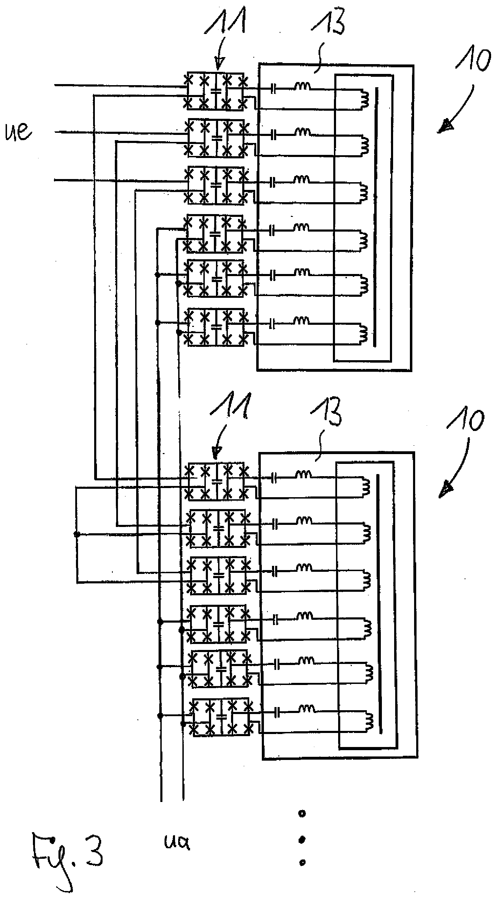

Die Figuren 1a, 1b zeigen jeweils ein schematisches Schaltbild eines ersten Ausführungsbeispiels einer elektrischen Schaltung zur potentialgetrennten Energieübertragung, die Figur 2 zeigt eine Abwandlung der elektrischen Schaltung der Figur 1b, die Figur 3 zeigt eine Zusammenschaltung mehrerer elektrischer Schaltungen gemäß der Figur 1b, und die Figuren 4, 5 zeigen weitere Abwandlungen der elektrischen Schaltung der Figur 1b.

In der Figur 1a ist eine elektrische Schaltung dargestellt, die zur potentialgetrennten Energieübertragung zwischen zwei elektrischen Energieübertragungsnetzen und/oder Energieverbrauchern vorgesehen ist. Es ist ein Grundmodul 10 vorhanden, das n Teilmodule 11 und eine magnetische Resonanzkopplung 13 aufweist, wobei die Anzahl n der Teilmodule 11 gleich drei oder größer als drei sein kann. Jedes der Teilmodule 11 weist einen ersten Stromrichter 15 und einen zweiten Stromrichter 16 auf, die über einen Energiespeicher 17 miteinander verbunden sind. Die zweiten Stromrichter 16 der Teilmodule 11 sind über die Resonanzkopplung 13 miteinander verbunden.

Die beiden Stromrichter 15, 16 der Teilmodule 11 können bidirektional betrieben werden. Der Zwischenspeicher 17 der Teilmodule 11 kann als Gleichspannungszwischenkreis ausgebildet sein.

An jedem der ersten Stromrichter 15 der Teilmodule 11 liegt eine erste Spannung u11, u12, ... an und zwischen jedem der zweiten Stromrichter 16 der Teilmodule 11 und der Resonanzkopplung 13 liegt eine zweite Spannung u21, u22, ... an. Mit Hilfe der Resonanzkopplung 13 wird eine magnetische Potentialtrennung zwischen den einzelnen Teilmodulen 11 erreicht.

In der Figur 1b ist das Grundmodul 10 der Figur 1a in einer beispielhaften Ausführungsform dargestellt. So geht aus der Figur 1b hervor, dass die ersten und zweiten Stromrichter 15, 16 der Teilmodule 11 jeweils mit Hilfe von Leistungshalbleiterbauelementen bzw. -modulen 19, beispielsweise mit Hilfe von IGBTs (IGBT = insulated gate bipolar transistor) aufgebaut sein können. Die Leistungshalbleiterbauelemente bzw. -module 19 sind dabei in der Figur 1b jeweils schematisch durch ein Kreuz dargestellt. Die Kreuze können somit Dioden oder IGBTs mit antiparallelen Dioden oder andere rückwärts leitende Leistungshalbleiter darstellen.

Für die beiden Stromrichter 15, 16 können sowohl Vollbrücken, als auch Halbbrücken zum Einsatz kommen.

Ebenso können die beiden Stromrichter 15, 16 zumindest teilweise als Dioden-Gleichrichter aufgebaut sein.

Weiterhin geht aus der Figur 1b hervor, dass die magnetische Resonanzkopplung 13 mit Hilfe eines Transformators 20 und jeweils eines den zweiten Stromrichtern 16 zugeordneten Resonanzzweigs 21 ausgebildet ist, wobei die Resonanzzweige 21 jeweils eine Serienschaltung aus einer Kapazität und einer Induktivität aufweisen. Der Transformator 20 dient der Potentialtrennung und die Resonanzzweige 21 bilden einen Resonanzkreis, der von den zweiten Stromrichtern 16 angeregt wird.

In der Figur 1b ist der Transformator 20 beispielhaft als ein Einzeltransformator dargestellt. Alternativ kann der Transformator 20 auch aus mehreren Einzeltransformatoren aufgebaut sein, insbesondere aus sechs Einzeltransformatoren.

Die magnetische Resonanzkopplung 13, insbesondere das Übersetzungsverhältnis des Transformators 20 und/oder die Werte der Kapazitäten bzw. der Induktivitäten der Resonanzzweige 21, ist an die zweiten Spannungen u21, u22, ... der jeweiligen Teilmodule 11 angepasst. Eine derartige magnetische Resonanzkopplung ist beispielsweise in der DE 10 2008 052 587 A1 beschrieben.

Gegebenenfalls sind für die Parallelschaltung der Teilmodule 11 zusätzliche parasitäre oder diskrete Ausgangsinduktivitäten zu berücksichtigen. Gegebenenfalls kann für die Teilmodule 11 auch eine sogenannte versetzte Taktung zur Anwendung kommen.

Wie erläutert wurde, sind in der Figur 1a n Teilmodule 11 vorhanden, mit n ≥ 3. Diese n Teilmodule 11 können in j eingangsseitige Teilmodule 11 und k ausgangsseitige Teilmodule 11 aufgeteilt werden, wobei j + k = n. An den j eingangsseitigen Teilmodulen 11 und den k ausgangsseitigen Teilmodulen 11 liegen, wie bereits erläutert wurde, die ersten Spannungen u11, u12, ... an. Diese ersten Spannungen u11, u12, ... können in beliebiger Weise zusammengeschaltet sein, beispielsweise als Serienschaltung oder als Parallelschaltung oder als Kombination davon.

In Abhängigkeit von der Zusammenschaltung können beispielsweise eine einzige Eingangsspannung und zwei Ausgangsspannungen vorhanden sein, wobei der Eingangsspannung beispielsweise j Teilmodule 11 zugeordnet sind und jeder der beiden Ausgangsspannungen beispielsweise k/2 Teilmodule 11 zugeordnet sind. Oder es können auch drei Eingangsspannungen und zwei Ausgangsspannungen vorhanden sein, wobei den drei Eingangsspannungen sowie den zwei Ausgangsspannung jeweils unterschiedliche Anzahlen von Teilmodulen 11 zugeordnet sind.

Es versteht sich, dass auch jegliche anderen Kombinationsmöglichkeiten denkbar sind, wobei immer eine oder mehrere der ersten Spannungen u11, u12, ... zu einer oder zu mehreren Eingangs- und Ausgangsspannungen zusammengeschaltet sein können. Damit sind letztlich jegliche Kombinationen von Eingangs- und Ausgangsspannungen durch eine entsprechende Zusammenschaltung der Teilmodule 11 herstellbar.

Damit wird der Vorteil erreicht, dass die eingangs- und ausgangsseitigen Leistungen in beliebiger Weise auf die Teilmodule 11 verteilt werden können.

In der Figur 1b ist beispielhaft n = 6 vorgegeben und es sind beispielhaft j = 4 und k = 2 gewählt. Die Spannungen u11, u12, u13, u14 an den vier eingangsseitigen Teilmodulen 11 sind beispielhaft in Serie geschaltet, während die Spannungen u15, u16 an den beiden ausgangsseitigen Teilmodulen 11 beispielhaft zueinander parallelgeschaltet sind. Es entsteht damit in der Figur 1b beispielhaft eine einzige Eingangsspannung ue und eine einzige Ausgangsspannung ua.

Im Betrieb des Grundmoduls 10 der Figur 1b wird die Eingangsspannung ue in die Ausgangsspannung ua umgesetzt. Die Eingangsspannung ue und die Ausgangsspannung ua sind dabei unterschiedlich. Insbesondere sind die Frequenzen fe, fa der beiden Spannungen ue, ua unterschiedlich.

Beispielsweise kann es sich bei der Eingangsspannung ue um eine Phase des öffentlichen Drehstromnetzes mit der Frequenz fe von 50 Hz und bei der Ausgangsspannung ua um das einphasige Bahnstromnetz mit der Frequenz fa von 16,7 Hz handeln. Ebenfalls kann es sich beispielsweise bei der Eingangsspannung ue um eine Gleichspannung mit der Frequenz fe = 0 handeln, die zum Beispiel von einer Solaranlage erzeugt wird, und bei der Ausgangsspannung ua um eine Phase eines Wechselstromverbrauchers.

Ganz allgemein können die Eingangsspannung ue und die Ausgangsspannung ua beliebigen Energieerzeugern und - verbrauchern zugeordnet sein und die Frequenzen fe, fa der beiden Spannungen ue, ua können beliebige Werte größer oder gleich Null aufweisen.

Wie erläutert wurde, liegen zwischen jedem der zweiten Stromrichter 16 der Teilmodule 11 und der Resonanzkopplung 13 die zweiten Spannungen u21, u22, ... an. Im Betrieb des Grundmoduls 10 der Figur 1b weisen diese zweiten Spannungen u21, u22, ... jeweils zugehörige Resonanzfrequenzen f21, f22, ... auf.

Die zweiten Spannungen u21, u22, ... und/oder die die Resonanzfrequenzen f21, f22, ... können im Wesentlichen beliebig gewählt werden. Dies kann durch eine entsprechende Wahl der Kapazitäten und der Induktivitäten der Resonanzkreise 21 der Teilmodule 11 erreicht werden.

Insbesondere können die Resonanzfrequenzen f21, f22, ... der zweiten Spannungen u21, u22, ... wesentlich größer als die Frequenzen fe, fa der Eingangs- und Ausgangsspannung ue, ua gewählt werden. Beispielsweise können die Resonanzfrequenzen f21, f22, ... im Bereich von etwa 10 kHz bis etwa 20 kHz gewählt werden.

Damit wird der Vorteil erreicht, dass der Transformator 20 der Resonanzkopplung 13 wesentlich kleiner ausgebildet sein kann als ein Transformator zur Umsetzung einer Spannung mit 50 Hz oder 16,7 Hz.

Im Betrieb wird die Eingangsspannung ue mit der Frequenz fe auf die ersten Stromrichter 15 der zugehörigen vier Teilmodule 11 aufgeteilt und dort in Zwischenkreis-Gleichspannungen umgewandelt, die an den Energiespeichern 17 anliegen. Diese Zwischenkreis-Gleichspannungen werden von den zweiten Stromrichtern 16 in die zweiten Spannungen u21, u22, u23, u24 der genannten vier Teilmodule 11 umgewandelt, die an der Resonanzkopplung 13 anliegen. In Abhängigkeit von diesen Spannungen u21, u22, u23, u24 werden von der Resonanzkopplung 13 die zweiten Spannungen u25, u26 an den beiden anderen Teilmodulen 11 erzeugt. Die zweiten Spannungen u25, u26 liegen an den zweiten Stromrichtern 16 der beiden zugehörigen Teilmodule 11 an, von denen sie jeweils in eine Zwischenkreis-Gleichspannung umgewandelt werden. Die Zwischenkreis-Gleichspannungen liegen an dem jeweiligen Energiespeicher 17 der beiden letztgenannten Teilmodule 11 an. Diese Zwischenkreis-Gleichspannungen werden dann von den ersten Stromrichtern 15 der beiden Teilmodule 11 umgewandelt und zu der Ausgangsspannung ua mit der Frequenz fa parallelgeschaltet.

Insgesamt ist damit eine Umsetzung der Eingangsspannung ue mit der Frequenz fe in die Ausgangsspannung ua mit der Frequenz fa und umgekehrt möglich. Auf diese Weise kann Energie von einem ersten Wechselstromnetz mit der Spannung ue und der Frequenz fe zu einem zweiten Wechselstromnetz mit der Spannung ua und der Frequenz fa und umgekehrt übertragen werden. Die Frequenzen f21, f22, ... der Spannungen u21, u22, ... können dabei mit Hilfe der Zwischenkreise 17 vorgegeben werden.

Es wird an dieser Stelle nochmals darauf hingewiesen, dass bei der elektrischen Schaltung der Figur 1b nicht nur eine einzige Eingangsspannung und eine einzige Ausgangsspannung vorhanden sein können, sondern dass mehrere Eingangsspannungen und/oder mehrere Ausgangsspannungen vorhanden sein können. Mit Hilfe von entsprechenden Zuordnungen und Verschaltungen können somit mit Hilfe des Grundmoduls 10 der Figur 1b eine oder mehrere Eingangsspannung/en in eine oder mehrere Ausgangsspannung/en umgesetzt werden.

In der Figur 2 ist das beispielhafte Grundmodul 10 der Figur 1b in einer abgewandelten Ausführungsform dargestellt, und zwar als aktives Filter, insbesondere als aktives Netzfilter.

Das Grundmodul 10 der Figur 2 entspricht dabei dem Grundmodul 10 der Figuren 1a und 1b. Insoweit wird auf die vorstehenden Erläuterungen zu den Figuren 1a und 1b verwiesen. Die eingangsseitige Verschaltung des Grundmoduls 10 der Figur 2 unterscheidet sich jedoch von der Verschaltung der Figur 1b.

So sind bei der beispielhaften Ausführungsform der Figur 2 drei Phasen 25 einer Drehstromspannung U_{Netz} an drei unterschiedliche Teilmodule 11 des Grundmoduls 10 angeschlossen. An die jeweils noch freien Anschlüsse dieser Teilmodule 11 sind drei Phasen 26 eines Verbrauchers mit der Lastspannung U_{Last} angeschlossen. Die drei letztgenannten Phasen 26 sind zusätzlich an drei weitere, unterschiedliche Teilmodule 11 des Grundmoduls 10 angeschlossen. Die drei jeweils noch freien Anschlüsse dieser weiteren Teilmodule 11 sind in einer Sternschaltung miteinander verbunden.

An den drei erstgenannten Teilmodulen 11 liegt jeweils eine phasenbezogene Differenzspannung zwischen der Drehstromspannung U_{Netz} und der Lastspannung U_{Last} an. In Abhängigkeit von diesen Differenzspannungen wird die Resonanzkopplung 13 beaufschlagt. Über die drei weiteren Teilmodule 11 wirkt dann die Resonanzkopplung 13 derart auf die Lastspannung U_{Last} ein, dass die Differenzspannungen möglichst klein werden.

Es versteht sich, dass das vorgenannte aktive Filter als serielles oder paralleles Filter oder als Kombination davon ausgebildet sein kann. Gegebenenfalls können in Abhängigkeit von der jeweiligen Anwendung noch zusätzliche Induktivitäten erforderlich sein.

In der Figur 3 ist eine elektrische Schaltung gezeigt, in der zwei oder mehrere Grundmodule 10 gemäß den Figuren 1a und 1b vorhanden sind. Jedes der Grundmodule 10 der Figur 3 ist dabei grundsätzlich in gleicher Weise aufgebaut wie in den Figuren 1a und 1b. Unterschiede können jedoch in der Anzahl von Teilmodulen 11 und/oder in der Zusammenstellung und/oder Zusammenschaltung der Eingangs- und Ausgangsspannungen vorhanden sein.

Beispielsweise können drei Grundmodule 10 vorhanden sein, die jeweils eine gleiche Anzahl von Teilmodulen 11 aufweisen, und die jeweils mit einer der drei Phasen von angeschlossenen Drehstromnetzen und/oder -verbrauchern verbunden sind. In diesem Fall ist also jeweils eines der drei Grundmodule 10 genau einer der drei Phasen der Drehstromnetze zugeordnet.

Alternativ ist es möglich, dass eine beliebige Anzahl m von Grundmodulen 10 vorhanden ist. Die einzelnen Grundmodule 10 sind dabei nicht bestimmten Phasen oder dergleichen zugeordnet. Stattdessen werden die durch die m Grundmodule 10 gebildeten m * n Teilmodule 11 als Gesamtheit betrachtet und auf die vorhandenen Phasen der angeschlossenen Netze bzw. Verbraucher verteilt. Von den m * n Teilmodulen 11 können dabei r Teilmodule 11 in Serie und s Teilmodule 11 parallel geschaltet sein, wobei gilt: r + s = m * n.

Diese Serien- oder Parallelschaltungen oder Kombinationen davon können unabhängig von den einzelnen Grundmodulen 10 zusammengestellt werden. Die Serienschaltung von Teilmodulen 11 kann dabei in Abhängigkeit von einer erwünschten Spannungsanpassung und die Parallelschaltung von Teilmodulen 11 kann in Abhängigkeit von einer erwünschten Stromanpassung vorgenommen werden.

In der Figur 3 ist beispielhaft eine Zusammenschaltung von Teilmodulen 11 in der Form von Serien- und Parallelschaltungen dargestellt, wobei in diesem Beispiel von einer einzigen Eingangsspannung ue und einer einzigen Ausgangsspannung ua ausgegangen wird. Es wird nochmals darauf hingewiesen, dass natürlich jegliche Arten von Zusammenschaltungen von zwei oder mehreren beliebigen Netzen möglich sind, wie dies im Zusammenhang mit den Figuren 1a und 1b bereits erläutert wurde.

Damit wird die Möglichkeit geschaffen, dass mit ein- und demselben Grundmodul 10 nahezu jede beliebige elektrische Schaltung aufgebaut werden kann, mit der eine potentialgetrennte Energieübertragung zwischen beliebigen Netzen und/oder Verbrauchern durchführbar ist. Durch die Anzahl der Grundmodule 10 und gegebenenfalls durch die Anzahl der Teilmodule 11 pro Grundmodul 10 kann eine Aufteilung der eingangs- und ausgangsseitigen Leistungen in nahezu beliebiger Weise vorgenommen werden. Die den Grundmodulen 10 jeweils zugeführte Leistung muss dabei immer der abgeführten Leistung entsprechen, da ansonsten die Zwischenkreis-Gleichspannung steigt oder fällt.

Gleichzeitig kann in allen Fällen durch die Wahl der Resonanzfrequenzen immer ein geringer Aufwand für die Resonanzkopplung 13 erreicht werden, insbesondere ein geringer Aufwand für den die Potentialtrennung realisierenden Transformator 20.

Unter anderem ist auch eine serielle Zusammenschaltung von Ausgangsspannungen zu einer Gleichspannung für eine HGÜ-Anwendung (HGÜ = Hochspannungsgleichstrom-Übertragung) möglich.

Die erläuterte Zusammenschaltung mehrerer Grundmodule 10 gemäß der Figur 3 ist dabei in entsprechender Weise auch auf ein aktives Filter gemäß der Figur 2 anwendbar.

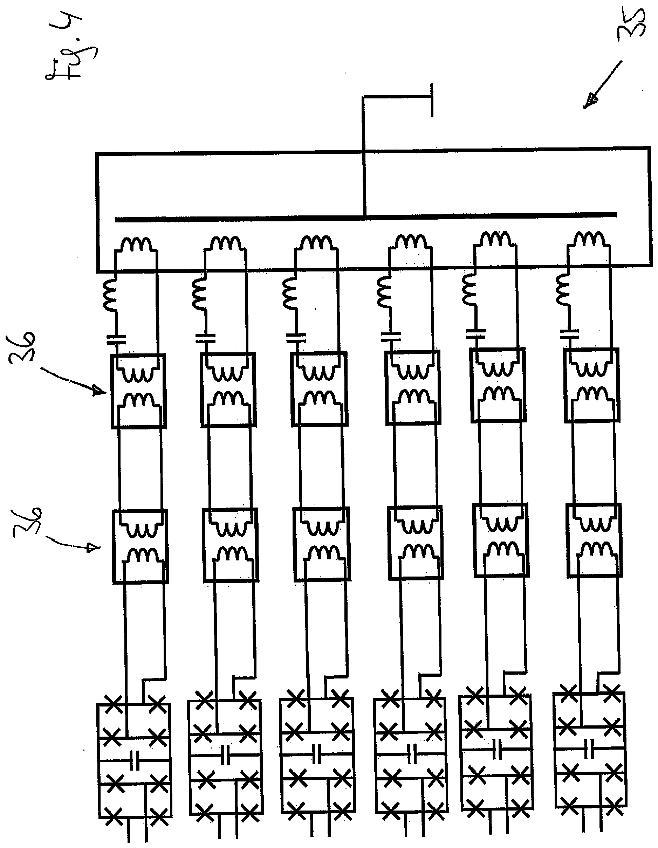

In der Figur 4 ist ein Grundmodul 35 gezeigt, das im Vergleich zu dem Grundmodul 10 noch einen oder mehrere zusätzliche Isolationstransformator/en 36 aufweist. Beispielhaft sind in der Figur 4 zwischen jedes der Teilmodule und den zugehörigen Resonanzzweig jeweils zwei Isolationstransformatoren 36 geschaltet. Es versteht sich, dass die Anzahl und die Verschaltung der Isolationstransformatoren 36 auch andersartig ausgebildet sein kann.

In der Figur 5 ist ein Grundmodul 38 gezeigt, das im Vergleich zu dem Grundmodul 35 der Figur 4 mehrere Resonanzzweige 39 aufweist. Der bei dem Grundmodul 35 der Figur 4 zu jedem der Teilmodule zugehörige Resonanzzweig ist beispielhaft bei dem Grundmodul 38 der Figur 5 in drei Teile aufgeteilt, wobei die drei Teile zwischen den Teilmodulen, den beiden Isolationstransformatoren 36 und dem Transformator angeordnet sind. Es versteht sich, dass die Anzahl und die Verschaltung der Resonanzzweige 39 auch andersartig ausgebildet sein kann.

Es wird darauf hingewiesen, dass die erläuterte/n Induktivität/en des Resonanzzweigs auch als parasitäre Induktivität/en in dem vorhandenen Transformator enthalten sein kann/können.

## Patentansprüche

1. Elektrische Schaltung zur potentialgetrennten Energieübertragung mit mindestens drei Teilmodulen (11), die über eine potentialtrennende, magnetische Resonanzkopplung (13) miteinander verbunden sind, wobei bei den Teilmodulen (11) jeweils ein erster Stromrichter (15), ein Energiespeicher (17) und ein zweiter Stromrichter (16) miteinander verbunden sind, die zweiten Stromrichter (16) über die Resonanzkopplung (13) miteinander verbunden sind, und im Betrieb an den ersten Stromrichtern (15) mindestens eine Eingangsspannung (ue) und mindestens eine Ausgangsspannung (ua) mit unterschiedlichen Frequenzen (fe, fa) vorhanden sind;
wobei n Teilmodule (11) vorhanden sind, wobei j Teilmodule (11) der/den Eingangsspannung/en (ue) und k Teilmodule (11) der/den Ausgangsspannung/en (ua) zugeordnet sind, und wobei j + k = n gilt; und
**dadurch gekennzeichnet, dass** die n Teilmodule (11) ein Grundmodul (10) bilden, und wobei m Grundmodule (10) vorhanden sind.

2. Elektrische Schaltung nach Anspruch 1, wobei im Betrieb zwischen den zweiten Stromrichtern (16) und der Resonanzkopplung (13) zweite Spannungen (u21, u22, ...) mit Resonanzfrequenzen (f21, f22, ...) vorhanden sind, die wesentlich größer sind als die Frequenzen (fe, fa) der Eingangs- und der Ausgangsspannung (ue, ua).

3. Elektrische Schaltung nach Anspruch 1, wobei die zu der/den Eingangsspannung/en zugehörigen Teilmodule (11) und/oder die zu der/den Ausgangsspannung/en zugehörigen Teilmodule (11) jeweils eine Serienschaltung oder eine Parallelschaltung oder eine Kombination davon bilden.

4. Elektrische Schaltung nach Anspruch 1, wobei die Ein- und Ausgangsspannung/en der entstehenden m * n Teilmodule (11) jeweils eine Serienschaltung oder eine Parallelschaltung oder eine Kombination davon bilden.

5. Elektrische Schaltung nach einem der vorstehenden Ansprüche, wobei die Eingangsspannung/en und die Ausgangsspannung/en mit ein- oder mehrphasigen Netzen und/oder Verbrauchern verbunden sind.

6. Elektrische Schaltung nach einem der vorstehenden Ansprüche, wobei die Resonanzkopplung (13) einen oder mehrere Transformator/en (20) und den Teilmodulen (11) zugeordnete Resonanzzweige (21) aufweist.

7. Elektrische Schaltung nach Anspruch 6, wobei jedem der Resonanzzweige (21) ein oder mehrere Isolationstransformator/en (36) zugeordnet ist/sind.

8. Elektrische Schaltung nach einem der Ansprüche 6 oder 7, wobei jeder Resonanzzweig (21) eine Kapazität und/oder eine Induktivität aufweist.

9. Elektrische Schaltung nach Anspruch 7 und 8, wobei die Kapazität und/oder die Induktivität zwischen die Isolationstransformatoren (36) aufgeteilt ist/sind.

## Claims

1. Electrical circuit for potential-separated energy transmission with at least three partial modules (11) which are connected together via a potential-separating magnetic resonance coupling (13), wherein the partial modules (11) contain a first power converter (15), an energy store (17) and a second power converter (16) connected to each other, wherein the second power converters (16) are connected together via the resonance coupling (13) and, in operation, at least one input voltage (ue) and at least one output voltage (ua) with different frequencies (fe, fa) are present at the first power converters (15);
wherein n partial modules (11) are present, wherein j partial modules (11) are assigned to the input voltage(s) (ue) and k partial modules (11) are assigned to the output voltage(s) (ua), and wherein j + k = n;
**characterized in that** the n partial modules (11) form a base module (10), and m base modules (10) are present.

2. Electrical circuit according to claim 1, wherein in operation, between the second power converters (16) and the resonance coupling (13), second voltages (u21, u22, ...) are present with resonance frequencies (f21, f22, ...) which are substantially greater than the frequencies (fe, fa) of the input and output voltage (ue, ua).

3. Electrical circuit according to claim 1, wherein the partial modules (11) associated with the input voltage(s) and the partial modules (11) associated with the output voltage(s) form a respective series circuit or a parallel circuit or a combination thereof.

4. Electrical circuit according to claim 1, wherein the input and output voltages of the occurring m * n partial modules (11) form a respective series circuit or a parallel circuit or a combination thereof.

5. Electrical circuit according to any of the preceding claims, wherein the input voltage(s) and the output voltage(s) are connected to monophase or multi-phase networks and/or consumers.

6. Electrical circuit according to any of the preceding claims, wherein the resonance coupling (13) has one or more transformer(s) (20), and resonance branches (21) assigned to the partial modules (21).

7. Electrical circuit according to claim 6, wherein one or more isolation transformer(s) (36) is/are assigned to each of the resonance branches (21).

8. Electrical circuit according to one of claims 6 or 7, wherein each resonance branch (21) has a capacitance and/or an inductance.

9. Electrical circuit according to claim 7 and 8, wherein the capacitance and/or the inductance is/are divided between the isolation transformers (36).

## Revendications

1. Circuit électrique pour la transmission d'énergie isolée par potentiel, comprenant au moins trois sous-modules (11) qui sont reliés les uns aux autres par l'intermédiaire d'un coupleur de résonance (13) magnétique à séparation de potentiel, sachant que dans les sous-modules (11), respectivement un premier convertisseur de courant (15), un accumulateur d'énergie (17) et un deuxième convertisseur de courant (16) sont reliés les uns aux autres, que les deuxièmes convertisseurs de courant (16) sont reliés entre eux par l'intermédiaire du coupleur de résonance (13), et que lors du fonctionnement, il existe sur les premiers convertisseurs de courant (15) au moins une tension d'entrée (ue) et au moins une tension de sortie (ua) avec des fréquences différentes (fe, fa) ;
n sous-modules (11) étant présents, sachant que j sous-modules (11) sont associés à la/aux tension(s) d'entrée (ue) et k sous-modules (11) sont associés à la/aux tension(s) de sortie (ua), et avec j + k = n ; et
**caractérisé en ce que** les n sous-modules (11) forment un module de base (10) et qu'il y a m modules de base (10).

2. Circuit électrique selon la revendication 1, dans lequel, lors du fonctionnement, il existe entre les deuxièmes convertisseurs de courant (16) et le coupleur de résonance (13) des deuxièmes tensions (u21, u22, ...) avec des fréquences de résonance (f21, f22, ...) qui sont nettement plus élevées que les fréquences (fe, fa) de la tension d'entrée et de la tension de sortie (ue, ua).

3. Circuit électrique selon la revendication 1, dans lequel les sous-modules (11) associés à la/aux tension(s) d'entrée et/ou les sous-modules (11) associés à la/aux tension(s) de sortie constituent respectivement un montage en série ou un montage en parallèle ou une combinaison de ceux-ci.

4. Circuit électrique selon la revendication 1, dans lequel la/les tension(s) d'entrée et de sortie des m * n sous-modules (11) créés constituent respectivement un montage en série ou un montage en parallèle ou une combinaison de ceux-ci.

5. Circuit électrique selon l'une des revendications précédentes, dans lequel la/les tension(s) d'entrée et de sortie sont reliées à des réseaux monophasés ou polyphasés et/ou à des récepteurs.

6. Circuit électrique selon l'une des revendications précédentes, dans lequel le coupleur de résonance (13) présente un ou plusieurs transformateurs (20) et des branches de résonance (21) associées aux sous-modules (11).

7. Circuit électrique selon la revendication 6, dans lequel un ou plusieurs transformateurs d'isolement (36) sont associés à chacune des branches de résonance (21).

8. Circuit électrique selon l'une des revendications 6 ou 7, dans lequel chaque branche de résonance (21) présente une capacité et/ou une inductance.

9. Circuit électrique selon les revendications 7 et 8, dans lequel la capacité et/ou l'inductance sont réparties entre les transformateurs d'isolement (36).
